(19) Europäisches Patentamt
European Patent Office
Office européen des brevets

(11) **EP 4 703 178 A1**

(12) **EUROPEAN PATENT APPLICATION**

(43) Date of publication:
**04.03.2026 Bulletin 2026/10**

(21) Application number: **24197228.0**

(22) Date of filing: **29.08.2024**

(51) International Patent Classification (IPC):
**B60L 3/00** (2019.01) **B60L 3/04** (2006.01)
**B60L 15/02** (2006.01) **B60L 50/51** (2019.01)
**H02J 7/34** (2006.01) **H02M 1/32** (2007.01)
**H02P 21/22** (2016.01) **H02P 27/08** (2006.01)
**H02P 29/024** (2016.01)

(52) Cooperative Patent Classification (CPC):
**B60L 3/04; B60L 3/0046; B60L 3/0061;
B60L 15/025; B60L 50/51; H02J 7/345; H02M 1/32;
H02M 7/48; H02P 21/22; H02P 27/08;
H02P 29/0241;** B60L 2210/30; B60L 2240/421;
B60L 2240/70; H02J 2105/37

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Truck Corporation
405 08 Göteborg (SE)**

(72) Inventors:
• **HALL, Sebastian
413 17 GÖTEBORG (SE)**
• **JÄGERHAG, Charlie
417 23 GÖTEBORG (SE)**

(74) Representative: **Ström & Gulliksson AB
P.O. Box 4188
203 13 Malmö (SE)**

(54) **COMPUTER SYSTEM AND METHOD TO DISCHARGE A DC-LINK CAPACITOR**

(57) A computer system comprising processing circuitry configured to obtain a discharge request of a DC-link capacitor (13) of an electric drive system (11); disconnect an electrical machine (10) of the electric drive system (11); determine a $q$ current for the electrical machine (10) being sufficient to start rotation of the electrical machine (10); and actively discharge the DC-link capacitor (13) by applying the determined $q$ current to the electrical machine (10).

FIG. 2

## Description

### TECHNICAL FIELD

The disclosure relates generally to electrical systems. In particular aspects, the disclosure relates to computer systems and methods to discharge a DC-link capacitor. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles, in particular electric vehicles, are typically provided with a high-voltage system designed to provide the required electrical power to one or more electrical machines. When such electric vehicle stands still and is turned off the high-voltage system must be deenergized. Generally, this is achieved by discharging the stored energy from the DC-link capacitor of the converter that drives the electric machine through a dedicated resistor. However, since the DC-link energy discharge is very important out of a safety point of view, there is a need for backup solutions if the primary discharge procedure fails.

### SUMMARY

According to a first aspect of the disclosure, a computer system is provided. The computer system comprises processing circuitry configured to: obtain a discharge request of a DC-link capacitor of an electric drive system; disconnect an electrical machine of the electric drive system; determine a $q$ current for the electrical machine being sufficient to start rotation of the electrical machine; and actively discharge the DC-link capacitor by applying the determined $q$ current to the electrical machine. The first aspect of the disclosure may seek to provide a robust discharge of the DC-link capacitor using components normally already present in an electric drive system. A technical benefit may include using the electric machine as an energy dissipator to discharge the DC-link capacitor. Further, when rotating the machine, the current is distributed evenly between stator windings. Therefore, the risk of overheating or unnecessary wear of the components decreases.

Optionally in some examples, including in at least one preferred example, the processing circuitry is further configured to determine the $q$ current for the electrical machine based on a reference rotational speed of the electrical machine. A technical benefit may include a robust yet efficient control of the electrical machine in order to achieve the desired discharge of the DC-link capacitor.

Optionally in some examples, including in at least one preferred example, the processing circuitry is further configured to set the reference rotational speed to a value being higher than the maximum rotational speed being achievable by the electrical energy stored by the DC-link capacitor. A technical benefit may include a fast discharge of the DC-link capacitor.

Optionally in some examples, including in at least one preferred example, the processing circuitry is further configured to set the reference rotational speed to a value being less than the maximum rotational speed being achievable by the electrical energy stored by the DC-link capacitor. A technical benefit may include a more controlled discharge of the DC-link capacitor.

Optionally in some examples, including in at least one preferred example, the processing circuitry is further configured to adjust the $q$ current for the electrical machine such that the rotational speed of the electrical machine corresponds to the reference rotational speed. A technical benefit may include ensuring a constant speed of the electrical machine during discharging, thereby facilitating control by allowing the $q$ current to be close to zero.

Optionally in some examples, including in at least one preferred example, the processing circuitry is further configured to determine a $d$ current for the electrical machine being sufficient to discharge the DC-link capacitor to a safe level threshold; and discharge the DC-link capacitor by applying the determined $d$ current to the electrical machine. A technical benefit may include controlling the discharge time by the $d$ current, which represents the length of the current vector.

Optionally in some examples, including in at least one preferred example, the processing circuitry is further configured to short circuit the electrical machine when the voltage of the DC-link capacitor has reached the safe level threshold. A technical benefit may include reducing the risk for the electrical machine to energize the capacitor.

Optionally in some examples, including in at least one preferred example, the processing circuitry is further configured to disconnect an energy storage system of the electric drive system from the electrical machine; determine the $q$ current for the electrical machine based on a reference rotational speed of the electrical machine; and set the reference rotational speed to a value being higher than the maximum rotational speed being achievable by the electrical energy stored by the DC-link capacitor, or set the reference rotational speed to a value being less than the maximum rotational speed being achievable by the electrical energy stored by the DC-link capacitor, and adjust the $q$ current for the electrical machine such that the rotational speed of the electrical machine corresponds to the reference rotational speed. The processing circuitry is further configured to: determine a $d$ current for the electrical machine being sufficient to discharge the DC-link capacitor to a safe level threshold; and discharge the DC-link capacitor by applying the determined $d$ current to the electrical machine; wherein the processing circuitry is further configured to: short circuit the electrical machine when the voltage of the DC-link capacitor has reached the safe level threshold. A technical benefit may include a simple and easy-to-implement active discharging of the DC-link capacitor.

According to a second aspect of the disclosure, a vehicle is provided. The vehicle comprises the computer system of the first aspect. The second aspect of the disclosure may seek to may seek to provide a robust discharge of the DC-link capacitor using components normally already present in an electric drive system. A technical benefit may include using the electric machine as an energy dissipator to discharge the DC-link capacitor. Further, when rotating the machine, the current is distributed evenly between stator windings. Therefore, the risk of overheating or unnecessary wear of the components decreases..

Optionally in some examples, including in at least one preferred example, the vehicle further comprises an electric drive system, and a DC-link discharge system configured to passively discharge the DC-link capacitor. A technical benefit may include reducing the risk for errors in capacitor discharge, by having a primary passive discharge system and a secondary/backup active discharge system.

According to a third aspect of the disclosure, a computer-implemented method is provided. The computer-implemented method comprises: obtaining, by processing circuitry of a computer system, a discharge request of a DC-link capacitor of an electric drive system; disconnecting , by the processing circuitry, an electrical machine of the electric drive system; determining, by the processing circuitry, a $q$ current for the electrical machine being sufficient to start rotation of the electrical machine; and actively discharging, by the processing circuitry, the DC-link capacitor by applying the determined $q$ current to the electrical machine. The third aspect of the disclosure may seek to may seek to provide a robust discharge of the DC-link capacitor using components normally already present in an electric drive system. A technical benefit may include using the electric machine as an energy dissipator to discharge the DC-link capacitor. Further, when rotating the machine, the current is distributed evenly between stator windings. Therefore, the risk of overheating or unnecessary wear of the components decreases.

Optionally in some examples, including in at least one preferred example, the method further comprises determining, by the processing circuitry, the $q$ current for the electrical machine based on a reference rotational speed of the electrical machine. A technical benefit may include a robust yet efficient control of the electrical machine in order to achieve the desired discharge of the DC-link capacitor.

Optionally in some examples, including in at least one preferred example, the method further comprises setting, by the processing circuitry, the reference rotational speed to a value being higher than the maximum rotational speed being achievable by the electrical energy stored by the DC-link capacitor. A technical benefit may include a fast discharge of the DC-link capacitor.

Optionally in some examples, including in at least one preferred example, the method further comprises setting, by the processing circuitry, the reference rotational speed to a value being less than the maximum rotational speed being achievable by the electrical energy stored by the DC-link capacitor. A technical benefit may include a more controlled discharge of the DC-link capacitor.

Optionally in some examples, including in at least one preferred example, the method further comprises adjusting, by the processing circuitry, the $q$ current for the electrical machine such that the rotational speed of the electrical machine corresponds to the reference rotational speed. A technical benefit may include ensuring a constant speed of the electrical machine during discharging, thereby facilitating control by allowing the $q$ current to be close to zero.

Optionally in some examples, including in at least one preferred example, the method further comprises determining, by the processing circuitry, a $d$ current for the electrical machine being sufficient to discharge the DC-link capacitor to a safe level threshold; and discharging, by the processing circuitry, the DC-link capacitor by applying the determined $d$ current to the electrical machine. A technical benefit may include controlling the discharge time by the $d$ current, as is it possible to change the $d$ current without modifying the torque. Hence, torque may be controlled by modifying the $q$ current, and heat dissipation may be controlled by modifying the $d$ current.

Optionally in some examples, including in at least one preferred example, the method further comprises short circuiting, by the processing circuitry, the electrical machine when the voltage of the DC-link capacitor has reached the safe level threshold. A technical benefit may include reducing the risk for the electrical machine to energize the capacitor.

Optionally in some examples, including in at least one preferred example, the method further comprises disconnecting, by the processing circuitry, an energy storage system of the electric drive system from the electrical machine. A technical benefit may include a simple and easy-to-implement active discharging of the DC-link capacitor.

According to a fourth aspect of the disclosure, a computer program product is provided. The computer program product comprises program code for performing, when executed by the processing circuitry, the method of the third aspect. The fourth aspect of the disclosure may seek to provide a robust discharge of the DC-link capacitor using components normally already present in an electric drive system. A technical benefit may include using the electric machine as an energy dissipator to discharge the DC-link capacitor. Further, when rotating the machine, the current is distributed evenly between stator windings. Therefore, the risk of overheating or unnecessary wear of the components decreases..

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect. The fifth aspect of the disclosure may seek to may seek to provide a robust discharge of the DC-link capacitor using components normally already present in an electric drive system. A technical benefit may include using the electric machine as an energy dissipator to discharge the DC-link capacitor. Further, when rotating the machine, the current is distributed evenly between stator windings. Therefore, the risk of overheating or unnecessary wear of the components decreases.

There are also disclosed herein computer systems, control units, code modules, computer-implemented methods, computer readable media, and computer program products associated with the above discussed technical benefits.

## BRIEF DESCRIPTION OF THE DRAWINGS

FIG. 1 is an exemplary side view of a vehicle according to an example.
FIG. 2 is an exemplary system diagram of an electrical drive system according to an example.
FIG. 3 is an exemplary system diagram of a discharge control system according to an example.
FIG. 4 is an exemplary system diagram of a discharge control system according to an example.
FIG. 5 is an exemplary system diagram of a discharge control system according to a further example.
FIGS. 6A-B are diagrams showing simulation results of a discharge control system according to an example.
FIGS. 7A-B are diagrams showing simulation results of a discharge control system according to a further example.
FIG. 8 is a flow chart of an exemplary method to discharge a DC-link capacitor according to an example.
FIG. 9 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The examples presented herein provide a solution to the problem of ensuring a safe, robust, and reliable discharge of a DC-link capacitor of an electric drive system.

Operating as a primary discharge system or as a secondary (backup) discharge system, the general idea is to use the energy of the DC-link capacitor to power an electrical machine of the electric drive system, thereby depleting the DC-link capacitor. The electrical machine is controlled to rotate, which thus requires the electrical machine to be disconnected from downstream components of the electric drive system. By having the electrical machine to rotate, the current will be distributed evenly between stator windings thereby reducing the risk for overheating. Further, unnecessary wear of the parts of the electrical machine is decreased.

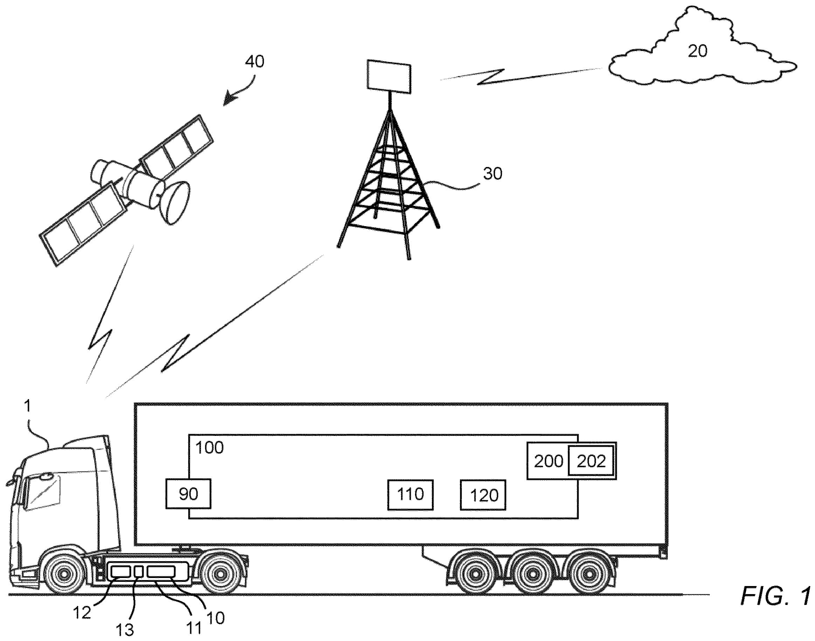

FIG. 1 is an exemplary view of a vehicle **1** according to one example. The vehicle **1** comprises at least one electrical machine **10** used to propel the vehicle **1**. The at least one electrical machine **10** forms part of an electric drive system **11** and may be powered by an energy storage system **12,** such as one or more batteries, configured to provide electrical energy to the one or more electrical machines **10**. The energy storage system **12** may form part of the electric drive system **11**, or it may be a separate component being connected to the electric drive system **11**.

The electric drive system **11** comprises a DC-link capacitor **13** being configured to balance the load of the energy storage system **12,** and to provide a more stable DC voltage by limiting voltage fluctuations.

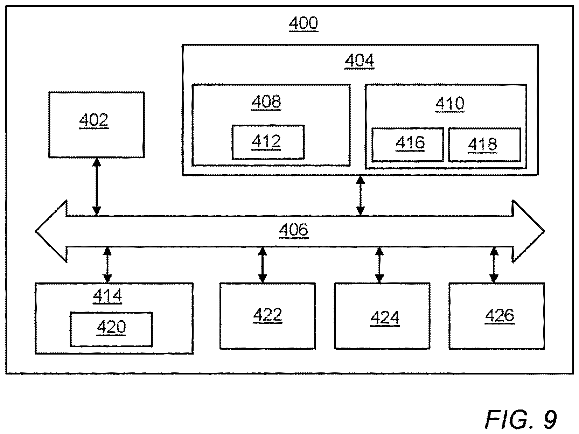

The vehicle **1** comprises, at least to some extent, processing circuitry **110** forming part of a computer system **100** (see **FIG. 9**). The processing circuitry **110** is configured to implement a discharge control system **200** which is configured to be operatively connected to the electric drive system **11** in order to control discharge of the DC-link capacitor **13**.

The vehicle **1** may further comprise communications circuitry **90** configured to receive and/or send communications. The communications circuitry **90** may be configured to enable the vehicle **1** to communicate with one or more external devices or systems such as a cloud server **20**. The communication with the external devices or systems may be directly or via a communications interface such as a cellular communications interface **30,** such as a radio base station. The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **90** may, additionally or alternatively, be configured to enable the vehicle **1** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **1** may for example be configured to utilize data obtain from the GNSS **40** to determine a geographical location of the vehicle **1**.

The vehicle **1** in **FIG. 1** comprises the computer system **100** and the discharge control system **200**. The computer system **100** may be operatively connected to the discharge control system **200** and optionally to the communications circuitry **90** of the vehicle **1**. The computer system **100** comprises processing circuitry **110**. The computer system **100** may comprise a storage device **120,** advantageously a non-volatile storage device such as a hard disk drives (HDDs), solid-state drives (SSDs) etc. In some examples, the storage device **120** is operatively connected to the computer system **100**. The discharge control system **200** may comprise discharge control system processing circuitry **202**; the discharge control system processing circuitry **202** may be part of the processing circuitry **110** of the computer system **100**.

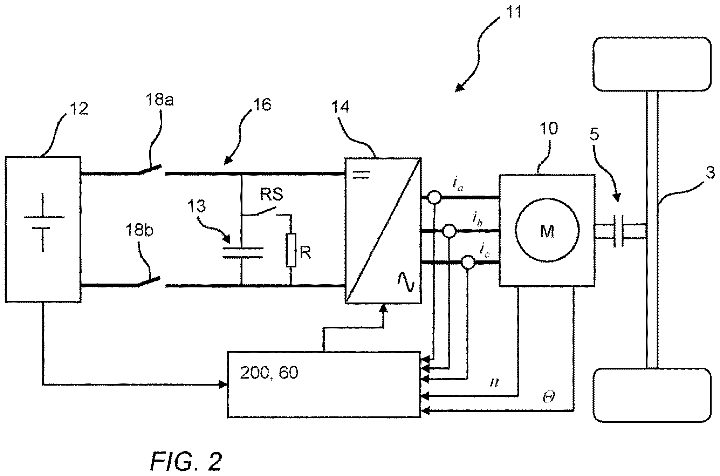

**FIG. 2** is a schematic system diagram of an electric drive system **11** according to an example. The electric drive system **11** comprises an electrical machine **10** being configured to provide drive torque to an associated vehicle. In the shown example, the electrical machine **10** is mechanically connected to a drive axle **3** of the associated vehicle by means of a disconnect coupling **5**.

A rechargeable energy storage system **12,** here in the form of a battery, is configured to provide electrical power to the electrical machine **10**. Typically, the battery **12** may have a power of 800V. The battery **12** is connected to a multi-phase inverter **14** via a DC bus **16**. The inverter **14** is configured to provide alternating phase currents $i_a$, $i_b$, $i_c$ to the electrical machine **10**.

A DC-link capacitor **13** is arranged on the DC side of the electric drive system **11**. The DC-link capacitor **13** may have a resistor **R** connected in parallel, and connectable by means of a switch **RS.**

An electrical machine controller **60** is provided and configured to control operation of the electrical machine **10**. Preferably, the electrical machine controller **60** is configured to control the electrical machine **10** using field-oriented control. The electrical machine controller **60** is further configured to implement a discharge control system **200**. It should be noted that in some examples, the discharge control system **200** forms part of the electrical machine controller **60**. In other examples, the discharge control system **200** is implemented by means of a dedicated controller being in operative communication with the electrical machine controller **60**.

The electrical machine controller **60** is configured to, based on input parameters such as the phase currents $i_a$, $i_b$, $i_c$, the speed $n$, and the angular position $\Theta$, control the electrical machine **10**. Preferably, the discharge control system **200** is configured to use the same, or similar, parameters to control discharge of the DC-link capacitor **13**.

Discharge of the DC-link capacitor **13** may be performed when the vehicle **1** is standstill and shut off. The battery **12** is electrically disconnected from the DC bus **16**, e.g. by opening contactors **18a**, **18b**. Following this, the primary control strategy may be to passively discharge the DC-link capacitor **13** by closing the resistor switch **RS,** thereby allowing the DC-link capacitor **13** to discharge. Optionally, discharge is performed by mechanically disconnecting the electrical machine **10** using the disconnect coupling **5,** and then perform active control of the electrical machine **10** by means of the discharge control system **200**. Alternatively, active discharging is performed only as a backup if the passive discharging fails.

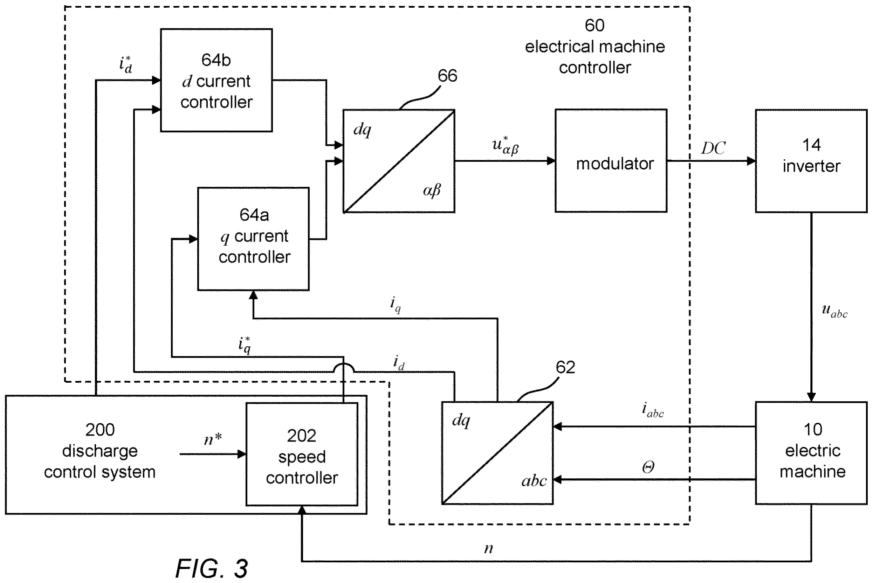

The discharge control system **200** is further described with reference to **FIG. 3**. In the shown example the discharge control system **200** is shown as an add-on to an electrical machine controller **60,** however as previously explained these two controllers/systems may be integrated at any suitable level.

Starting with the electrical machine controller **60,** a transformer **62** is configured to receive actual parameters from the electrical machine **10**. For field-oriented control, such parameters comprises the phase currents $i_{abc}$ and the angular position $\Theta$. The transformed **62** is configured to transform these parameters to actual $dq$ currents $i_d$, $i_q$. These $dq$ currents $i_d$, $i_q$ are used as input for current controllers **64a**, **64b** together with desired $dq$ currents $i_d^*$, $i_q^*$. During normal operation of the electrical machine **10,** the desired or target $dq$ currents $i_d^*$, $i_q^*$ may result from a torque request.

An inverse transformer **66** is configured to transform the determined $dq$ currents to desired voltages $u_{\alpha\beta}^*$, which are used by a modulator **68** to feed the inverter **14**.

For active discharging of the DC-link capacitor **13,** the discharge control system 200 comprises a speed controller **202**. The speed controller **202** receives the actual speed $n$ of the electrical machine **10,** and based on a set target speed $n^*$ (being greater than zero) the speed controller outputs the desired $dq$ currents $i_d^*$, $i_q^*$ to the current controllers **64a**, **64b.** To achieve the rotation of the electrical machine, a small torque is needed to overcome the speed-dependent losses of the electrical machine **10**. In addition, the length of the current vector must be free to adjust since it decides the rate of dissipation. To fulfill these prerequisites, the $q$ current is set to control the torque, and therefore also the speed. The $q$ current is preferably limited in magnitude to limit torque generation and subsequently the acceleration of the machine. The $d$ current is preferably set to control the length of the current vector, i.e. the discharge time.

Due to the small amount of energy in the DC-link capacitor **13** it is only possible to accelerate the electrical machine **10** to a relatively low speed. Therefore, there are two options available. One option is to set the speed reference *n\** to a relatively high (but still safe) value that will not be reached before the energy of the DC-link capacitor **13** is depleted. The other option is to set a lower speed reference *n\** that will be reached, discharging some energy while the shaft accelerates and the remaining discharging will be performed at a constant speed. When the speed is constant, it is the *d* current that determines the discharge time since the *q* current magnitude is negligible.

When the capacitor is discharged to a safe voltage level (e.g. < 60V) it is preferred that switches of the inverter **14** short circuit the electrical machine **10** by an Active Short Circuit (ASC) algorithm. Otherwise, the rotating machine **10** may energize the DC-link capacitor **13** again. The ASC algorithm will also generate a high braking torque that will effectively stop the rotation of the electrical machine **10.**

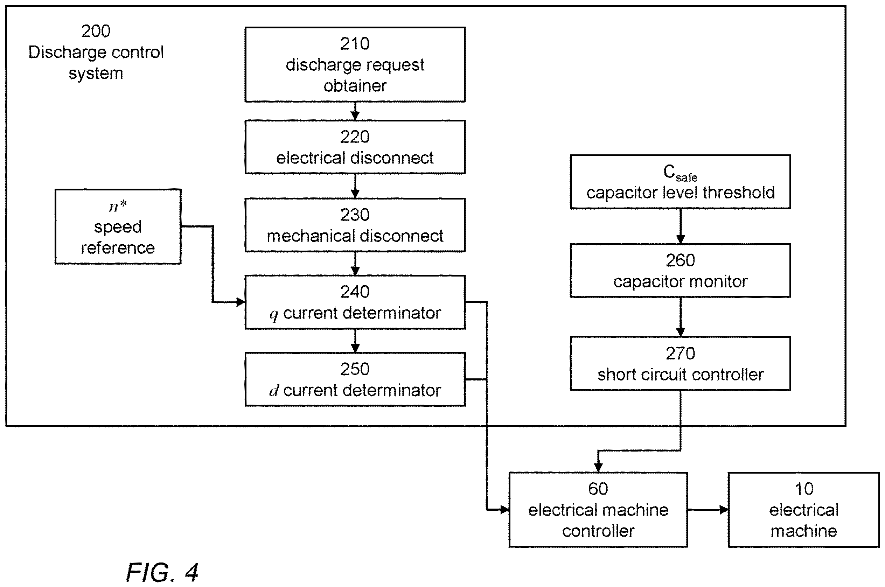

**FIG. 4** is an exemplary system diagram of a discharge control system **200** according to an example. The discharge control system **200** comprises a discharge request obtainer **210.** The discharge request obtainer **210** is configured to obtain a request for discharge of the DC-link capacitor **13,** and to initiate discharging based on such request. The request may be passive, e.g. being automatically obtainer upon shutdown of the vehicle **1.** Optionally the request may be obtained due to failure of a primary discharge system.

The discharge control system **200** further comprises an electrical disconnect **220.** The electrical disconnect **220** is configured to electrically disconnect the energy storage system **11,** e.g. the battery, from the DC bus **16.** Such disconnect may e.g. be performed using the contactors **18a, 18b** described with reference to **FIG. 2.**

The discharge control system **200** further comprises a mechanical disconnect **230.** The mechanical disconnect **230** is configured to mechanically disconnect the electrical machine **10** from downstream components of the vehicle's drivetrain. The mechanical disconnect may be implemented by means of the disconnect coupling **5** described with reference to **FIG. 2.**

The discharge control system **200** further comprises a *q* current determinator **240.** The q current determinator **240** is configured to determine a *q* current for the electrical machine controller **60** such that the electrical machine **10** starts to rotate, thereby drawing electrical energy from the DC-link capacitor **13.** Preferably, the *q* current determinator **240** is configured to receive a speed reference *n\** and determine the desired *q* current based on the speed reference *n\**. As mentioned above, the speed reference *n\** may be higher than what is possible to obtain based on the available energy of the DC-link capacitor **13,** or lower than what is possible to obtain.

The discharge control system **200** further comprises a *d* current determinator **250.** The *d* current determinator **250** is configured to determine a *d* current for the electrical machine controller **60** such that the electrical machine **10** continues rotating, thereby drawing electrical energy from the DC-link capacitor **13.** In a preferred example, the *dq* currents are determined such that the *q* current sets the torque/speed of the electrical machine **10,** while the *d* current sets the duration of the rotation.

The discharge control system **200** further comprises a capacitor monitor **260.** The capacitor monitor **260** is preferably a voltage monitor configured to monitor the voltage level, or energy level, of the DC-link capacitor **13.** Preferably, the capacitor monitor **260** is configured to receive a capacitor/voltage level threshold $C_{safe}$ that corresponds to a safe level of the capacitor **13.** Typically, the capacitor level threshold $C_{safe}$ is around 60V. When the capacitor monitor **260** determines that the actual energy level of the DC-link capacitor **13** has reached the capacitor level threshold $C_{safe}$, a short circuit controller **270** is activated.

The short circuit controller **270,** which preferably is configured to implement an Active Short Circuit (ASC) algorithm, controls the electrical machine **10** (possibly via the electrical machine controller **60** to effectively brake the electrical machine **10.**

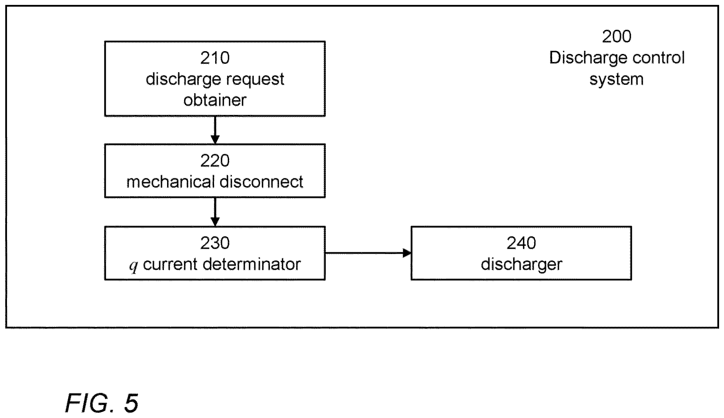

**FIG. 5** is an exemplary system diagram of a discharge control system **200** according to an example. The discharge control system **200** comprises a discharge request obtainer **210** configured to obtain a discharge request of a DC-link capacitor **13** of an electric drive system **11.** The discharge control system **200** further comprises a mechanical disconnect **220** configured to disconnect an electrical machine **10** of the electric drive system **11,** and a *q* current determinator **230** configured to determine a *q* current for the electrical machine **10** being sufficient to start rotation of the electrical machine **10.** The discharge control system **200** further comprises a discharger **240** being configured to actively discharge the DC-link capacitor **13** by applying the determined *q* current to the electrical machine **10.**

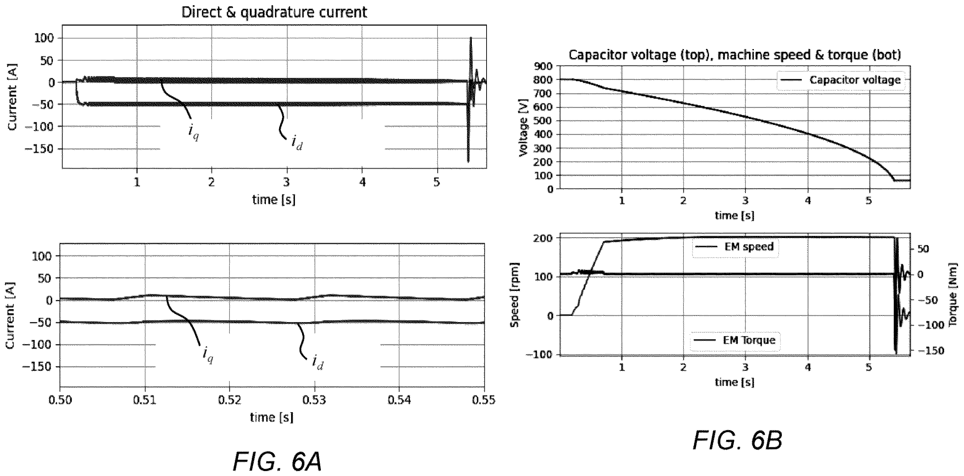

**FIGS. 6A-B** show simulation results for an active discharge procedure according to an example. The two diagrams of **FIG. 6A** show the *dq* currents as a function of time, the bottom diagram being a zoomed in section of the upper diagram. In particular, **FIG. 6A** shows the *dq* currents of an active discharge event where the speed reference *n\** is set to 200 rpms. **FIG. 6B** shows the results of the DC-capacitor voltage, the torque and speed from the same simulation. The *q* current is limited to 5A and the *d* current is set to a constant of -50A. The speed reference is set to 200 rpm. When the voltage has reached a safe level of <60V the ASC algorithm is engaged, which creates a braking torque that stops the machine from rotating. The results show that the method performs well and discharges the DC-link capacitor **13** in a controlled manner.

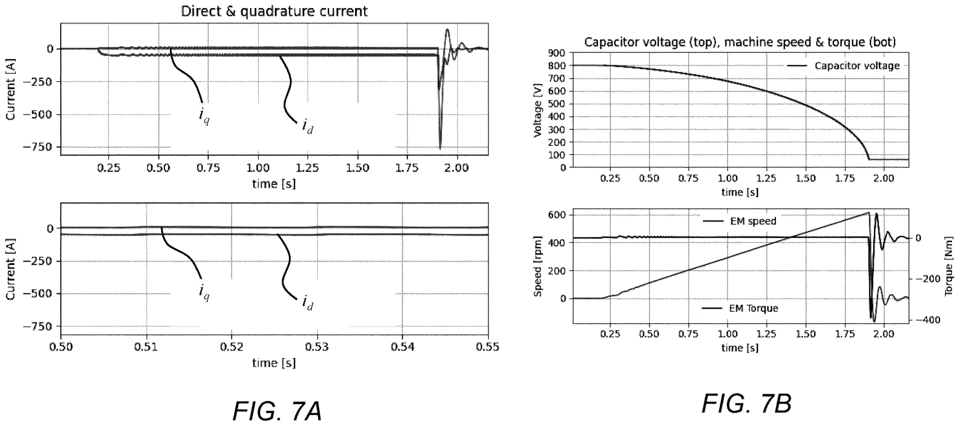

**FIGS. 7A-B** show simulation results for an active discharge procedure according to another example. The two diagrams of **FIG. 7A** show the *dq* currents as a function of time, the bottom diagram being a zoomed in section of the upper diagram. In particular, **FIG. 7A** shows the *dq* currents of an active discharge event where the speed reference *n\** is set much higher than in the example shown in **FIGS. 6A-B** ,in particular to a speed not reachable using the electrical energy available from the DC-link capacitor **13**. **FIG. 7B** shows the results of the DC-capacitor voltage, the torque and speed from the same simulation. When the voltage has reached a safe level of <60V the ASC algorithm is engaged, which creates a braking torque that stops the machine from rotating. The results show that the method performs well and discharges the DC-link capacitor **13** in a controlled manner.

From the simulations shown in **FIGS. 6A-B, 7A-B,** it is concluded that the method works both when the shaft speed of the electrical machine **10** is in steady state and when it accelerates.

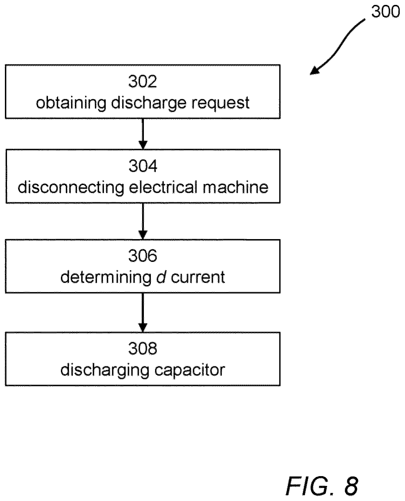

**FIG. 8** is a flow chart of an exemplary method **300** to discharge a DC-link capacitor according to an example. The method **300** is preferably a computer-implemented method, comprising obtaining, **302** by processing circuitry of a computer system, a discharge request of a DC-link capacitor **13** of an electric drive system **11.** The method **300** further comprises disconnecting **304,** by the processing circuitry, an electrical machine **10** of the electric drive system **11,** and determining **306,** by the processing circuitry, a *q* current for the electrical machine **10** being sufficient to start rotation of the electrical machine **10.** The method **300** further comprises actively discharging **308,** by the processing circuitry, the DC-link capacitor **13** by applying the determined *q* current to the electrical machine **10.**

**FIG. 9** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402**. A basic input/output system (BIOS) **412** may be stored in the non-volatile memory **408** and can include the basic routines that help to transfer information between elements within the computer system **400**.

The computer system **400** may further include or be coupled to a non-transitory computer-readable storage medium such as the storage device **414**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410**, which may include an operating system **416** and/or one or more program modules **418**. All or a portion of the examples disclosed herein may be implemented as a computer program **420** stored on a transitory or non-transitory computer-usable or computer-readable storage medium (e.g., single medium or multiple media), such as the storage device **414**, which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device

interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system comprising processing circuitry configured to: obtain a discharge request of a DC-link capacitor (13) of an electric drive system (11); disconnect an electrical machine (10) of the electric drive system (11); determine a q current ($i_q$) for the electrical machine (10) being sufficient to start rotation of the electrical machine (10); and actively discharge the DC-link capacitor (13) by applying the determined q current ($i_q$) to the electrical machine (10).

**Example 2:** The computer system of Example 1, wherein the processing circuitry is further configured to: determine the q current ($i_q$) for the electrical machine (10) based on a reference rotational speed ($n^*$) of the electrical machine.

**Example 3:** The computer system of Example 2, wherein the processing circuitry is further configured to: set the reference rotational speed ($n^*$) to a value being higher than the maximum rotational speed being achievable by the electrical energy stored by the DC-link capacitor (13).

**Example 4:** The computer system of Example 2, wherein the processing circuitry is further configured to: set the reference rotational speed ($n^*$) to a value being less than the maximum rotational speed being achievable by the electrical energy stored by the DC-link capacitor (13).

**Example 5:** The computer system of Example 4, wherein the processing circuitry is further configured to: adjust the q current ($i_q$) for the electrical machine (10) such that the rotational speed of the electrical machine (10) corresponds to the reference rotational speed ($n^*$).

**Example 6:** The computer system of any of Examples 1-5, wherein the processing circuitry is further configured to: determine a $d$ current ($i_d$) for the electrical machine (10) being sufficient to discharge the DC-link capacitor to a safe level threshold ($C_{safe}$); and discharge the DC-link capacitor (13) by applying the determined $d$ current ($i_d$) to the electrical machine (10).

**Example 7:** The computer system of Example 6, wherein the processing circuitry is further configured to: short circuit the electrical machine (10) when the voltage of the DC-link capacitor (13) has reached the safe level threshold ($C_{safe}$).

**Example 8:** The computer system of Example 1, wherein the processing circuitry is further configured to: disconnect an energy storage system (12) of the electric drive system (11) from the electrical machine (10); determine the $q$ current ($i_q$) for the electrical machine (10) based on a reference rotational speed ($n^*$) of the electrical machine; set the reference rotational speed ($n^*$) to a value being higher than the maximum rotational speed being achievable by the electrical energy stored by the DC-link capacitor (13), or set the reference rotational speed ($n^*$) to a value being less than the maximum rotational speed being achievable by the electrical energy stored by the DC-link capacitor (13), and adjust the $q$ current ($i_q$) for the electrical machine (10) such that the rotational speed of the electrical machine (10) corresponds to the reference rotational speed ($n^*$); wherein the processing circuitry is further configured to: determine a $d$ current ($i_d$) for the electrical machine (10) being sufficient to discharge the DC-link capacitor to a safe level threshold ($C_{safe}$); and discharge the DC-link capacitor (13) by applying the determined $d$ current ($i_d$) to the electrical machine (10); wherein the processing circuitry is further configured to: short circuit the electrical machine (10) when the voltage of the DC-link capacitor (13) has reached the safe level threshold ($C_{safe}$).

**Example 9:** A vehicle (1) comprising the computer system of any of Examples 1-8.

**Example 10:** The vehicle of Example 9, further comprising: an electric drive system (11), and a DC-link discharge system (R, RS) configured to passively discharge the DC-link capacitor (13).

**Example 11:** A computer-implemented method, comprising: obtaining, by processing circuitry of a computer system, a discharge request of a DC-link capacitor (13) of an electric drive system (11); disconnecting , by the processing circuitry, an electrical machine (10) of the electric drive system (11); determining, by the processing circuitry, a $q$ current ($i_q$) for the electrical machine (10) being sufficient to start rotation of the electrical machine (10); and actively discharging, by the processing circuitry, the DC-link capacitor (13) by applying the determined $q$ current ($i_q$) to the electrical machine (10).

**Example 12:** The method of Example 11, further comprising: determining, by the processing circuitry, the $q$ current ($i_q$) for the electrical machine (10) based on a reference rotational speed ($n^*$) of the electrical machine.

**Example 13:** The method of Example 12, further comprising: setting, by the processing circuitry, the reference rotational speed ($n^*$) to a value being higher than the maximum rotational speed being achievable by the electrical energy stored by the DC-link capacitor (13).

**Example 14:** The method of Example 12, further comprising: setting, by the processing circuitry, the reference rotational speed ($n^*$) to a value being less than the maximum rotational speed being achievable by the electrical energy stored by the DC-link capacitor (13).

**Example 15:** The method of Example 14, further comprising: adjusting, by the processing circuitry, the $q$ current ($i_q$) for the electrical machine (10) such that the rotational speed of the electrical machine (10) corresponds to the reference rotational speed ($n^*$).

**Example 16:** The method of any of Examples 11-15, further comprising: determining, by the processing circuitry, a $d$ current ($i_d$) for the electrical machine (10) being sufficient to discharge the DC-link capacitor to a safe level threshold ($C_{safe}$); and discharging, by the processing circuitry, the DC-link capacitor (13) by applying the determined $d$ current ($i_d$) to the electrical machine (10).

**Example 17:** The method of Example 16, further comprising: short circuiting, by the processing circuitry, the electrical machine (10) when the voltage of the DC-link capacitor (13) has reached the safe level threshold ($C_{safe}$).

**Example 18:** The method of any of Examples 11-17, further comprising: disconnecting, by the processing circuitry, an energy storage system (12) of the electric drive system (11) from the electrical machine (10).

**Example 19:** A computer program product comprising program code for performing, when executed by the processing circuitry, the method of any of Examples 11-18.

**Example 20:** A non-transitory computer-readable storage medium comprising instructions, which when executed by the processing circuitry, cause the processing circuitry to perform the method of any of Examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:

   obtain a discharge request of a DC-link capacitor (13) of an electric drive system (11);
   disconnect an electrical machine (10) of the electric drive system (11);

   determine a $q$ current ($i_q$) for the electrical machine (10) being sufficient to start rotation of the electrical machine (10); and
   actively discharge the DC-link capacitor (13) by applying the determined $q$ current ($i_q$) to the electrical machine (10).

2. The computer system of claim 1, wherein the processing circuitry is further configured to:
   determine the $q$ current ($i_q$) for the electrical machine (10) based on a reference rotational speed ($n^*$) of the electrical machine.

3. The computer system of claim 2, wherein the processing circuitry is further configured to:
   set the reference rotational speed ($n^*$) to a value being higher than the maximum rotational speed being achievable by the electrical energy stored by the DC-link capacitor (13).

4. The computer system of claim 2, wherein the processing circuitry is further configured to:
   set the reference rotational speed ($n^*$) to a value being less than the maximum rotational speed being achievable by the electrical energy stored by the DC-link capacitor (13).

5. The computer system of claim 4, wherein the processing circuitry is further configured to:
   adjust the $q$ current ($i_q$) for the electrical machine (10) such that the rotational speed of the electrical machine (10) corresponds to the reference rotational speed ($n^*$).

6. The computer system of any of claims 1-5, wherein the processing circuitry is further configured to:

   determine a $d$ current ($i_d$) for the electrical machine (10) being sufficient to discharge the DC-link capacitor to a safe level threshold ($C_{safe}$); and
   discharge the DC-link capacitor (13) by applying the determined $d$ current ($i_d$) to the electrical machine (10).

7. The computer system of claim 6, wherein the processing circuitry is further configured to:
   short circuit the electrical machine (10) when the voltage of the DC-link capacitor (13) has reached the safe level threshold ($C_{safe}$).

8. The computer system of claim 1, wherein the processing circuitry is further configured to:

   disconnect an energy storage system (12) of the electric drive system (11) from the electrical machine (10);
   determine the $q$ current ($i_q$) for the electrical machine (10) based on a reference rotational speed ($n^*$) of the electrical machine;

set the reference rotational speed ($n^*$) to a value being higher than the maximum rotational speed being achievable by the electrical energy stored by the DC-link capacitor (13), or

set the reference rotational speed ($n^*$) to a value being less than the maximum rotational speed being achievable by the electrical energy stored by the DC-link capacitor (13), and adjust the $q$ current ($i_q$) for the electrical machine (10) such that the rotational speed of the electrical machine (10) corresponds to the reference rotational speed ($n^*$);

wherein the processing circuitry is further configured to:

> determine a $d$ current ($i_d$) for the electrical machine (10) being sufficient to discharge the DC-link capacitor to a safe level threshold ($C_{safe}$); and
> discharge the DC-link capacitor (13) by applying the determined $d$ current ($i_d$) to the electrical machine (10);
> wherein the processing circuitry is further configured to:

> short circuit the electrical machine (10) when the voltage of the DC-link capacitor (13) has reached the safe level threshold ($C_{safe}$).

9. A vehicle (1) comprising the computer system of any of claims 1-8.

10. The vehicle of claim 9, further comprising:

> an electric drive system (11), and
> a DC-link discharge system (R, RS) configured to passively discharge the DC-link capacitor (13).

11. A computer-implemented method, comprising:

> obtaining, by processing circuitry (402) of a computer system (400), a discharge request of a DC-link capacitor (13) of an electric drive system (11);
> disconnecting , by the processing circuitry, an electrical machine (10) of the electric drive system (11);
> determining, by the processing circuitry, a $q$ current ($i_q$) for the electrical machine (10) being sufficient to start rotation of the electrical machine (10); and
> actively discharging, by the processing circuitry, the DC-link capacitor (13) by applying the determined $q$ current ($i_q$) to the electrical machine (10).

12. The method of claim 11, further comprising:
determining, by the processing circuitry, the $q$ current ($i_q$) for the electrical machine (10) based on a reference rotational speed ($n^*$) of the electrical machine.

13. The method of claim 11 or 12, further comprising:
short circuiting, by the processing circuitry, the electrical machine (10) when the voltage of the DC-link capacitor (13) has reached a safe level threshold ($C_{safe}$).

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.

FIG. 1

FIG. 2

EP 4 703 178 A1

**FIG. 3**

**200**
**Discharge control**
**system**

**210**
**discharge request**
**obtainer**

**220**
**electrical disconnect**

$n^*$
**speed**
**reference**

**230**
**mechanical disconnect**

**240**
$q$ **current determinator**

**250**
$d$ **current determinator**

**C**$_{safe}$
**capacitor level threshold**

**260**
**capacitor monitor**

**270**
**short circuit controller**

**60**
**electrical machine**
**controller**

**10**
**electrical**
**machine**

*FIG. 4*

**200
Discharge control system**

**210
discharge request obtainer** → **220
mechanical disconnect** → **230
$q$ current determinator** → **240
discharger**

*FIG. 5*

**Direct & quadrature current** (top left plot, Current [A] vs time [s])

$i_q$

$i_d$

$i_q$

$i_d$

*FIG. 6A*

**Capacitor voltage (top), machine speed & torque (bot)**

Capacitor voltage

EM speed

EM Torque

*FIG. 6B*

EP 4 703 178 A1

FIG. 7B

FIG. 7A

EP 4 703 178 A1

300

| 302<br>obtaining discharge request |
| :---: |

↓

| 304<br>disconnecting electrical machine |
| :---: |

↓

| 306<br>determining *d* current |
| :---: |

↓

| 308<br>discharging capacitor |
| :---: |

*FIG. 8*

FIG. 9

**European Patent Office** / Europäisches Patentamt / European Patent Office / Office européen des brevets

## EUROPEAN SEARCH REPORT

**Application Number**

EP 24 19 7228

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/088703 A1 (WANG BORU [US] ET AL) 14 March 2024 (2024-03-14) * abstract * * paragraphs [0003] - [0005], [0017] - [0020], [0023] - [0029], [0033] - [0041], [0045] - [0049]; figures 1-8 * | 1-15 | INV. B60L3/00 B60L3/04 B60L15/02 B60L50/51 H02J7/34 H02M1/32 |
| X | CN 113 162 385 B (UNIV ZHEJIANG) 31 August 2021 (2021-08-31) * abstract * * paragraphs [0004] - [0028], [0039] - [0081], [0084] - [0107]; figures 1-4 * | 1-15 | H02P21/22 H02P27/08 H02P29/024 |
| X | JP 2006 187085 A (NISSAN MOTOR) 13 July 2006 (2006-07-13) * abstract * * paragraphs [0013] - [0019], [0022] - [0028], [0031] - [0032]; figures 1,2 * | 1,2,4-15 | |
| X | US 2021/320492 A1 (CHON CHAE DUCK [KR] ET AL) 14 October 2021 (2021-10-14) * abstract * * paragraphs [0016] - [0019], [0034] - [0036], [0040] - [0047], [0051] - [0056], [0060] - [0065]; figures 1-8 * | 1,2,5-7, 9-15 | **TECHNICAL FIELDS SEARCHED (IPC)** B60L H02J H02P H02M |

The present search report has been drawn up for all claims

| Place of search | Date of completion of the search | Examiner |
|---|---|---|
| The Hague | 28 February 2025 | Molnar, Sabinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 7228

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2025

| Patent document cited in search report | | Publication date | Patent family member(s) | | Publication date |
|---|---|---|---|---|---|
| US 2024088703 | A1 | 14-03-2024 | NONE | | |
| CN 113162385 | B | 31-08-2021 | NONE | | |
| JP 2006187085 | A | 13-07-2006 | NONE | | |
| US 2021320492 | A1 | 14-10-2021 | CN | 113511075 A | 19-10-2021 |
| | | | KR | 20210126412 A | 20-10-2021 |
| | | | US | 2021320492 A1 | 14-10-2021 |

For more details about this annex : see Official Journal of the European Patent Office, No. 12/82